# EUROPEAN PATENT APPLICATION

(11) **EP 4 482 203 A1**
(43) Date of publication of application: **25.12.2024**
(21) Application number: 24183466.2
(22) Date of filing: 20.06.2024
(51) Int. Cl.: H04W 28/02, H04W 72/12, H04W 76/15, H04W 76/27, H04W 88/06

(54) **IN-DEVICE COEXISTENCE AND SMALL DATA TRANSMISSION**

(30) Priority: 20.06.2023 FI 20235695
(71) Applicant: Nokia Technologies Oy, 02610 Espoo (FI)
(72) Inventor: KOSKINEN, Jussi-Pekka, 90420 Oulu (FI); KOSKELA, Jarkko Tuomo, 90510 Oulu (FI); TURTINEN, Samuli Heikki, 91100 Ii (FI)
(74) Representative: Script Intellectual Property LLP

(57) **Abstract**

According to an example aspect of the present disclosure, there is provided a method comprising determining, by a user equipment, that the user equipment expects to experience an in-device coexistence problem in a Small Data Transmission, SDT, procedure and performing by the user equipment, based on said determination, an action related to the SDT procedure in the inactive state.

## Description

### FIELD

Various example embodiments relate in general to in-device coexistence and Small Data Transmission, SDT.

### BACKGROUND

User Equipments, UEs, typically have limited power. Hence, UEs may switch between a power-saving state, like an idle state, and a state that is designed for transmissions of large amounts of data, like a connected state. In addition, there may be one or more states between the power-saving state and the state that is designed for transmissions of large amounts of data. For instance, an inactive state may be exploited to enable low signaling burden when switching quickly to the connected state. At least small amounts of data may be transmitted when a UE is in the inactive state. The states may be referred as modes as well and UEs may transition between the modes.

In-Device Coexistence, IDC, problem may refer for example to an internal issue, or possibility of an internal issue, detected by the UE. The internal issue may be caused by coexistence related to usage of certain radio resources that the UE cannot resolve by itself. IDC may be a problem for example in cellular communication networks, such as in networks operating according to Long Term Evolution, LTE, and/or 5G radio access technology. 5G radio access technology may also be referred to as New Radio, NR, access technology. Since its inception, LTE has been widely deployed and 3rd Generation Partnership Project, 3GPP, still develops LTE. Similarly, 3GPP also develops standards for 5G/NR. One of the topics in the 3GPP discussions is related IDC and according to the discussions there is a need to provide enhanced methods, apparatuses and computer programs at least related to handling of IDC in case of Small Data Transmission, SDT. Such enhancements may also be beneficial in other cellular communication networks as well, such as in 6G networks in the future.

### SUMMARY

According to some aspects, there is provided the subject-matter of the independent claims. Some example embodiments are defined in the dependent claims.

The scope of protection sought for various example embodiments of the invention is set out by the independent claims. The example embodiments and features, if any, described in this specification that do not fall under the scope of the independent claims are to be interpreted as examples useful for understanding various example embodiments of the invention.

According to a first aspect of the present invention, there is provided a user equipment comprising at least one processor and at least one memory storing instructions that, when executed by the at least one processor, cause the user equipment determine that the user equipment expects to experience an in-device coexistence problem in a Small Data Transmission, SDT, procedure and perform, based on said determination, an action related to the SDT procedure.

Example embodiments of the first aspect may comprise at least one feature from the following bulleted list or any combination of the following features:
- wherein the user equipment is in an inactive state or in an idle state;
- wherein the action comprises initiating, based on said determination, a non-SDT resume procedure;
- wherein the action further comprises transmitting, to a wireless network node, an in-device coexistence indication after the non-SDT resume procedure is completed;
- wherein the action comprises deciding, based on said determination, to refrain from initiating the SDT procedure;
- the action comprises postponing, based on said determination, the SDT procedure until the user equipment expects not to experience in-device coexistence problems in the SDT procedure;
- the action comprises initiating, after determining that the in-device coexistence problem lasts longer than a threshold, a non-SDT resume procedure;
- determine that the user equipment expects to experience the in-device coexistence problem on a frequency of an initial bandwidth part;
- wherein the SDT procedure is a mobile originated or a mobile terminated SDT procedure;
- wherein the SDT procedure is a random access or a configured grant SDT procedure;
- wherein the in-device coexistence problem comprises interference between a first radio access technology and a second radio access technology;
- wherein the first radio access technology is a cellular radio access technology and the second radio access technology is another cellular radio access technology;
- wherein the first radio access technology is a cellular radio access technology and the second radio access technology is a non-cellular radio access technology.

According to a second aspect of the present invention, there is provided a wireless network node comprising at least one processor and at least one memory storing instructions that, when executed by the at least one processor, cause the wireless network node receive from a user equipment, when a user equipment expects to experience an in-device coexistence problem in a Small Data Transmission, SDT, procedure, a connection resume request for a non-SDT resume procedure and perform, based on said reception, the non-SDT resume procedure.

According to a third aspect of the present invention, there is provided a first method comprising determining, by a user equipment, that the user equipment expects to experience an in-device coexistence problem in a Small Data Transmission, SDT, procedure and performing by the user equipment, based on said determination, an action related to the SDT procedure.

According to a fourth aspect of the present invention, there is provided a second method comprising receiving by a wireless network node from a user equipment, when a user equipment expects to experience an in-device coexistence problem in a Small Data Transmission, SDT, procedure, a connection resume request for a non-SDT resume procedure and performing by the wireless network node, based on said reception, the non-SDT resume procedure.

According to a fifth aspect of the present invention, there is provided a user equipment comprising means for determining that the user equipment expects to experience an in-device coexistence problem in a Small Data Transmission, SDT, procedure and means for performing, based on said determination, an action related to the SDT procedure.

According to a sixth aspect of the present invention, there is provided a wireless network node comprising means for receiving from a user equipment, when a user equipment expects to experience an in-device coexistence problem in a Small Data Transmission, SDT, procedure, a connection resume request for a non-SDT resume procedure and means for performing, based on said reception, the non-SDT resume procedure.

According to a seventh aspect of the present invention, there is provided a non-transitory computer readable medium having stored thereon a set of computer readable instructions that, when executed by at least one processor, cause an apparatus to at least perform the first or the second method. According to an eighth aspect of the present invention, there is provided a computer program comprising instructions which, when the program is executed by an apparatus, cause the apparatus to perform the first or the second method.

### BRIEF DESCRIPTION OF THE DRAWINGS

FIG. 1 illustrates an example of a network scenario in accordance with at least some example embodiments;
FIG. 2 illustrates an example apparatus capable of supporting at least some example embodiments;
FIG. 3 illustrates a flow graph of a first method in accordance with at least some example embodiments.

### EXAMPLE EMBODIMENTS

In-Device Coexistence, IDC, problem may refer for example to an internal issue, or possibility of an internal issue, detected by a User Equipment, UE. The internal issue may be caused by coexistence related to usage of certain radio resources that the UE cannot resolve by itself. Avoidance of IDC problems may be enhanced by the procedures described herein. More specifically, the UE may determine that IDC problems are to be expected if a Small Data Transmission, SDT, procedure is initiated while the UE is in an inactive state. In such a case, the UE may decide to perform an action related to the SDT procedure in the inactive state, instead of initiating the SDT procedure right away. For example, the UE may decide to initiate a non-SDT resume procedure or postpone the SDT procedure until no IDC problems are expected. Hence, the IDC problems may be avoided during the SDT procedure.

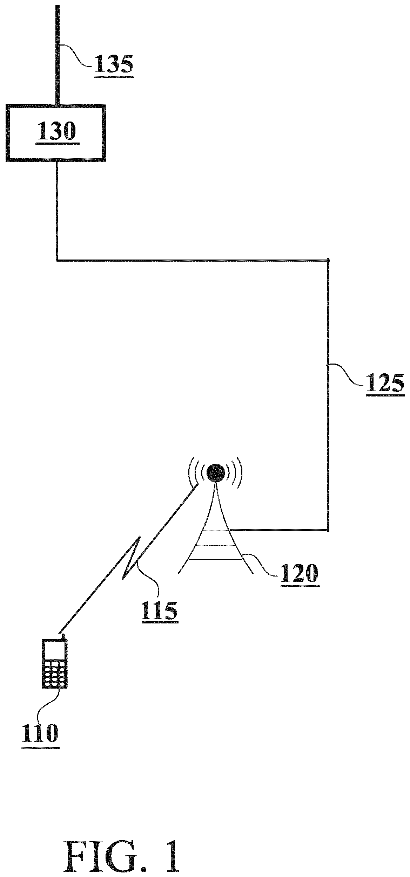

FIG. 1 illustrates an example of a network scenario in accordance with at least some example embodiments. According to the example network scenario of FIG. 1, there may be a cellular communication system, which comprises UE 110, wireless network node 120 and core network element 130. UE 110 may be connected to wireless network node 120 via air interface 115 and wireless network node 120 may be connected to core network 130 via wired interface 125. In some example embodiments, air interface 115 may a beam-based interface.

UE 110 may comprise, for example, a smartphone, a cellular phone, a Machine-to-Machine, M2M, node, Machine-Type Communications, MTC, node, RedCap UE (Reduced Capability UE) node, an Internet of Things, IoT, node, a car telemetry unit, a laptop computer, a tablet computer or, indeed, any kind of suitable wireless terminal, like a relay. Wireless network node 120 may be considered as a serving node for UE 110 and one cell of wireless network node 120 may be a serving cell for UE 110.

Air interface 115 between UE 110 and wireless network node 120 may be configured in accordance with a Radio Access Technology, RAT, which both UE 110 and wireless network node 120 are configured to support. Examples of cellular RATs include Long Term Evolution, LTE, New Radio, NR, which may also be known as fifth generation, 5G, radio access technology and MulteFire. For example in the context of LTE, wireless network node 120 may be referred to as eNB while wireless network node 120 may be referred to as gNB in the context of NR. In some example embodiments, wireless network node 120 may be referred to as a Transmission and Reception Point, TRP, or control multiple TRPs that may be co-located or non-co-located. In some example embodiments, wireless network node 120 may be a relay.

In some example embodiments, UE 110 and wireless network node 120 may be configured to operate according to at least one standard defined by the 3rd Generation Partnership Project, 3GPP. In any case, example embodiments of the present disclosure are not restricted to any particular wireless technology. Instead, example embodiments may be exploited in any cellular communication network, wherein SDT is used and IDC problems may occur.

In some example embodiments, UE 110 may be configured to operate using at least two RATs. For example, UE 110 may be configured to operate using a first RAT and a second RAT, e.g., in a Multi Radio, MR, - Dual Connectivity, DC, scenario. That is, the first RAT may be a cellular RAT, like LTE, and the second RAT may be another cellular RAT, like 5G/NR. The MR-DC scenario may thus be a NR-DC scenario or an Evolved-Universal Terrestrial Radio Access-New Radio, EN,-DC scenario. Alternatively, the first radio access technology may be a cellular RAT and the second RAT may be a non-cellular RAT. Examples of non-cellular RATs comprise Wireless Local Area Network, WLAN, and Worldwide Interoperability for Microwave Access, WiMAX. That is, UE 110 may be configured to operate using at least one 3GPP standard and at least one non-3GPP standard.

Wireless network node 120 may be connected, directly or via at least one intermediate node, with core network 130 via interface 125. Core network 130 may be, in turn, coupled via interface 135 with another network (not shown in FIGURE 1), via which connectivity to further networks may be obtained, for example via a worldwide interconnection network. Wireless network node 120 may be connected, directly or via at least one intermediate node, with core network 130 or with another core network.

In some example embodiments, the network scenario may comprise a relay node instead of, or in addition to, UE 110 and/or wireless network node 120. Relaying may be used for example when operating on millimeter-wave frequencies. One example of the relay node may be an Integrated Access and Backhaul, IAB, node. The IAB node may be referred to as a self-backhauling relay as well. Another example of a relay may be an out-band relay. In general, the relay node may comprise two parts:
1) Distributed Unit, DU, part which may facilitate functionalities of wireless network node 120, such as a gNB. Thus, in some example embodiments, the DU part of a relay may be referred to as wireless network node 120 and the DU may perform tasks of wireless network node 120;
2) Mobile Termination, MT, part which may facilitate functionalities of UE 110, i.e., a backhaul link which may be the communication link between a parent node (DU), such as a DU part of wireless network node 120, and the relay, such as an IAB node. In some example embodiments, the MT part may be referred to as UE 110 and perform tasks of UE 110.

In general, the SDT procedure in the inactive state may be exploited to avoid the signalling overhead and delay associated with transitioning UE 110 from the inactive state to the connected state, to perform a SDT. UE 110 may transmit data while being in the inactive state, without transitioning to the connected state. The SDT procedure may be for example Random Access, RA,-based SDT procedure or a Configured Grant, CG, -based procedure SDT. Alternatively, or in addition, the SDT procedure may be a Mobile Originated, MO, procedure or a Mobile Terminated, MT, procedure. The inactive state may be a Radio Resource Control, RRC, inactive state. The connected state may be an RRC connected state.

In some example embodiments, UE 110 may experience IDC problems, for example when UE 110 is equipped with at least two radio transceivers to support the use of at least two RATs. The at least two radio transceivers may be positioned in close proximity of each other and operate at the same time on the same, or neighboring, frequencies. At least in such a case there is a risk that the use of the at least two radio transceivers may lead to interference. Such interference may be referred to as IDC interference and further lead to IDC problems.

IDC problems may be internal to UE 110, caused by the possibility of coexistence related to usage of certain radio resources. In some example embodiments, UE 110 might not be able to resolve IDC problems by itself. In such a case, UE 110 may provide information about IDC problems to wireless network node 120. Wireless network node 120 may then restrict radio resource usage to avoid internal problems caused by coexistence, or potential problems, of UE 110.

Embodiments of the present invention provide enhancements for a SDT procedure, in particular to avoid IDC problems in the SDT procedure. At least IDC problems between two RATs may be avoided. For example, IDC problems between a cellular RAT and another RAT, such as another cellular RAT or a non-cellular RAT, may be avoided during the SDT procedure when UE 110 is in the inactive state.

UE 110 may determine, when UE 110 is in the inactive state, that UE 110 expects to experience an IDC problem in the SDT procedure. Alternatively, UE 110 may be in the idle state or any other non-connected state.

UE 110 may perform said determination before initiating the SDT procedure. Hence, said determination that UE 110 expects to experience the IDC problem may comprise predicting that the IDC problems would take place in the near future, e.g., within 5 seconds, if the SDT procedure would be initiated. UE 110 may predict the forthcoming IDC problems, e.g., based on resource allocation associated with the at least two RATs that UE 110 is configured to use. For example, UE 110 may determine that it is configured to operate using the at least two RATs on the same, or adjacent, frequencies.

In some example embodiments, an IDC problem may occur when different radios, such as 3GPP and non-3GPP radios, are transmitting or receiving at the same time on a certain frequency. That is, an IDC problem may occur when frequencies of 3GPP and non-3GPP radios are overlapping or adjacent. UE 110 may know what is happening in the device, i.e., which "radios" are on e.g. Bluetooth, WLAN, GNS, GPS etc. UE 110 may also know that which of these radios are using overlapping/adj acent frequencies than 3GPP radio frequency (NR, LTE, etc). From these UE 110 may determine that is expects to experience the IDC problem in the SDT procedure.

UE 110 may then perform, based on said determination, an action related to the SDT procedure in the inactive state. That is, UE 110 may perform the action responsive to said determination. Said action may be, e.g., initiation of a non-SDT resume procedure, refraining from initiating the SDT procedure or postponing the SDT procedure. Alternatively, UE 110 may be in the idle state or any other non-connected state.

The non-SDT resume procedure may refer to moving from the inactive state to the connected state. For example, in the non-SDT resume procedure UE 110 may transmit an RRC Resume Request and wireless network node 120 may reply with an RRC Resume message. UE 110 may then be in the RRC CONNECTED state when RRC Resume is completed.

For example, UE 110 may initiate a non-SDT resume procedure in case UE 110 expects to experience IDC problems in the SDT procedure. That is, UE 110 may initiate the non-SDT resume procedure based on said determination. After the non-SDT resume procedure is completed, UE 110 may transmit an IDC indication to wireless network node 120 in the connected mode. Wireless network node 120 may, e.g., move UE 110 to another frequency, wherein the problem does not occur. Alternatively, wireless network node 120 may schedule UE 110 more seldom so that transmission overlaps do not occur.

In some example embodiments, UE 110 might not initiate the SDT procedure if UE 110 expects to experience IDC problems in the SDT procedure. That is, UE 110 may decide, based on said determination, to refrain from initiating the SDT procedure. UE 110 may then move to the connected state, if the resume procedure is successful.

In some example embodiments, UE 110 may postpone the SDT procedure until UE 110 expects no IDC problems in the SDT procedure. That is, UE 110 may postpone, based on said determination, the SDT procedure until UE 110 expects not to experience IDC problems in the SDT procedure. UE 110 may then initiate the SDT procedure after it has determined that no IDC problems are expected.

In some example embodiments, UE 110 may initiate a non-SDT resume in case IDC problems are lasting more time than a predefined/preconfigured threshold. That is, UE 110 may initiate, after determining that the IDC problem lasts longer than the threshold, the non-SDT resume procedure. The threshold may be, e.g., tens of milliseconds, hundreds of milliseconds or seconds.

In some example embodiments, UE 110 may initiate transmission of a UE Assistance Information, UAI, message during the SDT procedure if UE 110 experiences IDC problems. The UAI message may comprise a preference of UE 110 for a move to the connected state. UE 110 may then be allowed to send an IDC indication in the connected state.

In some example embodiments, UE 110 may determine whether it has IDC problems on an initial Bandwidth Part, BWP, frequency. That is, UE 110 may determine that it expects to experience the IDC problem on a frequency of the initial BWP. In some example embodiments, the SDT procedure may be performed always on the initial BWP frequency.

In some example embodiments, the SDT procedure may comprise the MO SDT or the MT SDT procedure. In case of the MO SDT procedure, the procedure may be initiated by UE 110. In case of the MT SDT procedure, the procedure may be initiated by wireless network node 120. Alternatively, or in addition, the SDT procedure may comprise the RA-SDT or the CG-SDT procedure.

In some example embodiments, the IDC problem may comprise interference between a first RAT and a second RAT. For example, the first RAT may be a cellular RAT, such as a 3GGP RAT, like NR. The second RAT may be another cellular RAT, such as another 3GPP RAT, like LTE. Alternatively, the second RAT may be a non-cellular RAT, such as a non-3GPP RAT, like WLAN. That is, the IDC problem may comprise interference between a 3GPP RAT (further comprising various MR-DC architectures, such as NR-DC and EN-DC) and a non-3GPP RAT (e.g. WLAN).

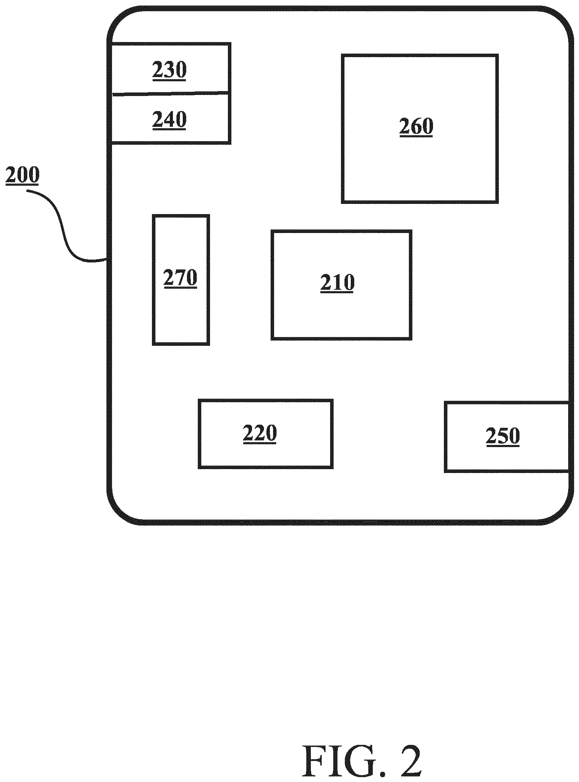

FIG. 2 illustrates an example apparatus capable of supporting at least some example embodiments. Illustrated is device 200, which may comprise, for example, UE 110 or wireless network node 120, or a control device configured to control the functioning thereof, possibly when installed therein. Comprised in device 200 is processor 210, which may comprise, for example, a single- or multi-core processor wherein a single-core processor comprises one processing core and a multi-core processor comprises more than one processing core. Processor 210 may comprise, in general, a control device. Processor 210 may comprise more than one processor. Processor 210 may be a control device. A processing core may comprise, for example, a Cortex-A8 processing core manufactured by ARM Holdings or a Steamroller processing core produced by Advanced Micro Devices Corporation. Processor 210 may comprise at least one Qualcomm Snapdragon and/or Intel Atom processor. Processor 210 may comprise at least one application-specific integrated circuit, ASIC. Processor 210 may comprise at least one field-programmable gate array, FPGA. Processor 210 may be means for performing method steps in device 200. Processor 210 may be configured, at least in part by computer instructions, to perform actions.

A processor may comprise circuitry, or be constituted as circuitry or circuitries, the circuitry or circuitries being configured to perform phases of methods in accordance with example embodiments described herein. As used in this application, the term "circuitry" may refer to one or more or all of the following: (a) hardware-only circuit implementations, such as implementations in only analog and/or digital circuitry, and (b) combinations of hardware circuits and software, such as, as applicable: (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Device 200 may comprise memory 220. Memory 220 may comprise random-access memory and/or permanent memory. Memory 220 may comprise at least one RAM chip. Memory 220 may comprise solid-state, magnetic, optical and/or holographic memory, for example. Memory 220 may be at least in part accessible to processor 210. Memory 220 may be at least in part comprised in processor 210. Memory 220 may be means for storing information. Memory 220 may comprise computer instructions that processor 210 is configured to execute. When computer instructions configured to cause processor 210 to perform certain actions are stored in memory 220, and device 200 overall is configured to run under the direction of processor 210 using computer instructions from memory 220, processor 210 and/or its at least one processing core may be considered to be configured to perform said certain actions. Memory 220 may be at least in part comprised in processor 210. Memory 220 may be at least in part external to device 200 but accessible to device 200.

Device 200 may comprise a transmitter 230. Device 200 may comprise a receiver 240. Transmitter 230 and receiver 240 may be configured to transmit and receive, respectively, information in accordance with at least one cellular or non-cellular standard. Transmitter 230 may comprise more than one transmitter. Receiver 240 may comprise more than one receiver. Transmitter 230 and/or receiver 240 may be configured to operate in accordance with Global System for Mobile communication, GSM, Wideband Code Division Multiple Access, WCDMA, Long Term Evolution, LTE, and/or 5G/NR standards, for example.

Device 200 may comprise a Near-Field Communication, NFC, transceiver 250. NFC transceiver 250 may support at least one NFC technology, such as Bluetooth, Wibree or similar technologies.

Device 200 may comprise User Interface, UI, 260. UI 260 may comprise at least one of a display, a keyboard, a touchscreen, a vibrator arranged to signal to a user by causing device 200 to vibrate, a speaker and a microphone. A user may be able to operate device 200 via UI 260, for example to accept incoming telephone calls, to originate telephone calls or video calls, to browse the Internet, to manage digital files stored in memory 220 or on a cloud accessible via transmitter 230 and receiver 240, or via NFC transceiver 250, and/or to play games.

Device 200 may comprise or be arranged to accept a user identity module 270. User identity module 270 may comprise, for example, a Subscriber Identity Module, SIM, card installable in device 200. A user identity module 270 may comprise information identifying a subscription of a user of device 200. A user identity module 270 may comprise cryptographic information usable to verify the identity of a user of device 200 and/or to facilitate encryption of communicated information and billing of the user of device 200 for communication effected via device 200.

Processor 210 may be furnished with a transmitter arranged to output information from processor 210, via electrical leads internal to device 200, to other devices comprised in device 200. Such a transmitter may comprise a serial bus transmitter arranged to, for example, output information via at least one electrical lead to memory 220 for storage therein. Alternatively to a serial bus, the transmitter may comprise a parallel bus transmitter. Likewise processor 210 may comprise a receiver arranged to receive information in processor 210, via electrical leads internal to device 200, from other devices comprised in device 200. Such a receiver may comprise a serial bus receiver arranged to, for example, receive information via at least one electrical lead from receiver 240 for processing in processor 210. Alternatively to a serial bus, the receiver may comprise a parallel bus receiver.

Device 200 may comprise further devices not illustrated in FIG. 2. For example, where device 200 comprises a smartphone, it may comprise at least one digital camera. Some devices 200 may comprise a back-facing camera and a front-facing camera, wherein the back-facing camera may be intended for digital photography and the front-facing camera for video telephony. Device 200 may comprise a fingerprint sensor arranged to authenticate, at least in part, a user of device 200. In some example embodiments, device 200 lacks at least one device described above. For example, some devices 200 may lack a NFC transceiver 250 and/or user identity module 270.

Processor 210, memory 220, transmitter 230, receiver 240, NFC transceiver 250, UI 260 and/or user identity module 270 may be interconnected by electrical leads internal to device 200 in a multitude of different ways. For example, each of the aforementioned devices may be separately connected to a master bus internal to device 200, to allow for the devices to exchange information. However, as the skilled person will appreciate, this is only one example and depending on the example embodiment various ways of interconnecting at least two of the aforementioned devices may be selected without departing from the scope of the example embodiments.

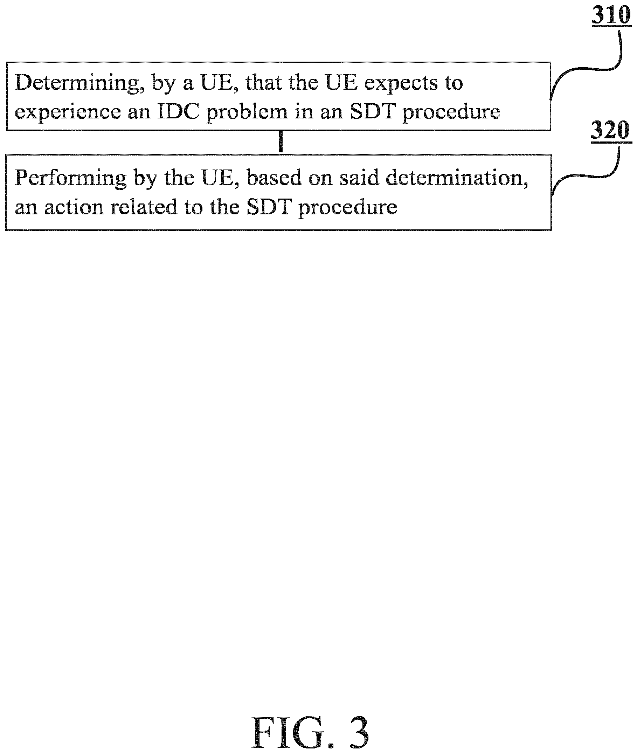

FIG. 3 is a flow graph of a first method in accordance with at least some example embodiments. The phases of the illustrated method may be performed by apparatus 200, like UE 110 or by a control device configured to control the functioning thereof, possibly when installed therein.

The method may comprise, at step 310, determining that the user equipment expects to experience an in-device coexistence problem in a Small Data Transmission, SDT, procedure. The method may also comprise, at step 320, performing, based on said determination, an action related to the SDT procedure.

It is to be understood that the example embodiments disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular example embodiments only and is not intended to be limiting.

Reference throughout this specification to one example embodiment or an example embodiment means that a particular feature, structure, or characteristic described in connection with the example embodiment is included in at least one example embodiment. Thus, appearances of the phrases "in one example embodiment" or "in an example embodiment" in various places throughout this specification are not necessarily all referring to the same example embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various example embodiments and examples may be referred to herein along with alternatives for the various components thereof. It is understood that such example embodiments, examples, and alternatives are not to be construed as de facto equivalents of one another, but are to be considered as separate and autonomous representations.

In an example embodiment, an apparatus, such as, for example, UE 110 or wireless network node 120, may comprise means for carrying out the example embodiments described above and any combination thereof.

In an example embodiment, a computer program may be configured to cause a method in accordance with the example embodiments described above and any combination thereof. In an example embodiment, a computer program product, embodied on a non-transitory computer readable medium, may be configured to control a processor to perform a process comprising the example embodiments described above and any combination thereof.

In an example embodiment, an apparatus, such as, for example, UE 110 or wireless network node 120, may comprise at least one processor, and at least one memory including computer program code, wherein the at least one memory and the computer program code are configured to, with the at least one processor, cause the apparatus at least to perform the example embodiments described above and any combination thereof.

Furthermore, the described features, structures, or characteristics may be combined in any suitable manner in one or more example embodiments. In the preceding description, numerous specific details are provided, such as examples of lengths, widths, shapes, etc., to provide a thorough understanding of example embodiments of the disclosure. One skilled in the relevant art will recognize, however, that the disclosure can be practiced without one or more of the specific details, or with other methods, components, materials, etc. In other instances, well-known structures, materials, or operations are not shown or described in detail to avoid obscuring aspects of the disclosure.

While the forgoing examples are illustrative of the principles of the example embodiments in one or more particular applications, it will be apparent to those of ordinary skill in the art that numerous modifications in form, usage and details of implementation can be made without the exercise of inventive faculty, and without departing from the principles and concepts of the disclosure. Accordingly, it is not intended that the disclosure be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

### INDUSTRIAL APPLICABILITY

At least some example embodiments find industrial application in communication networks, wherein IDC problems may arise.

### ACRONYMS LIST

- 3GPP: 3rd Generation Partnership Project
- BS: Base Station
- BWP: Bandwidth Part
- CG: Configured Grant
- DC: Dual Connectivity
- DU: Distributed Unit
- EN: Evolved-Universal Terrestrial Radio Access-New Radio
- GSM: Global System for Mobile communication
- IAB: Integrated Access and Backhaul
- IDC: In-Device Coexistence
- IoT: Internet of Things
- LTE: Long-Term Evolution
- M2M: Machine-to-Machine
- MO: Mobile Originated
- MR: Multi-Radio
- MT: Mobile Termination
- NR: New Radio
- RA: Random Access
- RAT: Radio Access Technology
- RRC: Radio Resource Control
- SDT: Small Data Transmission
- TRP: Transmission and Reception Point
- UAI: UE Assistance
- UE: User Equipment
- UI: User Interface
- WCDMA: Wideband Code Division Multiple Access
- WiMAX: Worldwide Interoperability for Microwave Access
- WLAN: Wireless Local Area Network

**REFERENCE SIGNS LIST**

| | |
|---|---|
| 110 | UE |
| 115 | Air interface |
| 120 | Wireless network node |
| 125, 135 | Wired interfaces |
| 130 | Core Network |
| 200 - 270 | Structure of the apparatus of FIG. 2 |
| 310 - 320 | Phases of the method in FIG. 3 |

## Claims

1. A user equipment, comprising:
at least one processor; and
at least one memory storing instructions that, when executed by the at least one processor, cause the apparatus at least to:
- determine that the user equipment expects to experience an in-device coexistence problem in a Small Data Transmission, SDT, procedure; and
- perform, based on said determination, an action related to the SDT procedure.

2. The user equipment according to claim 1, wherein the user equipment is in an inactive state or in an idle state.

3. The user equipment according to claim 1 or claim 2, wherein the action comprises initiating, based on said determination, a non-SDT resume procedure.

4. The user equipment according to claim 3, wherein the action further comprises transmitting, to a wireless network node, an in-device coexistence indication after the non-SDT resume procedure is completed.

5. The user equipment according to claim 1 or claim 2, wherein the action comprises deciding, based on said determination, to refrain from initiating the SDT procedure.

6. The user equipment according to claim 1 or claim 2, the action comprises postponing, based on said determination, the SDT procedure until the user equipment expects not to experience in-device coexistence problems in the SDT procedure.

7. The user equipment according to claim 1 or claim 2, the action comprises initiating, after determining that the in-device coexistence problem lasts longer than a threshold, a non-SDT resume procedure.

8. The user equipment according to any of the preceding claims, wherein the stored instructions further cause, when executed by the at least one processor, the user equipment at least to:
- determine that the user equipment expects to experience the in-device coexistence problem on a frequency of an initial bandwidth part.

9. The user equipment according to any of the preceding claims, wherein the SDT procedure is a mobile originated or a mobile terminated SDT procedure.

10. The user equipment according to any of the preceding claims, wherein the SDT procedure is a random access or a configured grant SDT procedure.

11. The user equipment according to any of the preceding claims, wherein the in-device coexistence problem comprises interference between a first radio access technology and a second radio access technology.

12. The user equipment according to claim 11, wherein the first radio access technology is a cellular radio access technology and the second radio access technology is another cellular radio access technology.

13. The user equipment according to claim 11, wherein the first radio access technology is a cellular radio access technology and the second radio access technology is a non-cellular radio access technology.

14. A wireless network node, comprising:
at least one processor; and
at least one memory storing instructions that, when executed by the at least one processor, cause the apparatus at least to:
- receive from a user equipment, when a user equipment expects to experience an in-device coexistence problem in a Small Data Transmission, SDT, procedure, a connection resume request for a non-SDT resume procedure; and
- perform, based on said reception, the non-SDT resume procedure.

15. A method, comprising:
- determining, by a user equipment, that the user equipment expects to experience an in-device coexistence problem in a Small Data Transmission, SDT, procedure; and
- performing by the user equipment, based on said determination, an action related to the SDT procedure.
